# EUROPEAN PATENT APPLICATION

(11) **EP 3 208 919 A1**
(43) Date of publication of application: **23.08.2017**
(21) Application number: 17155967.7
(22) Date of filing: 14.02.2017
(51) Int. Cl.: H02K 21/24, H02K 1/27

(54) **ROTOR FOR AXIAL GAP TYPE DYNAMO-ELECTRIC MACHINE**

(30) Priority: 19.02.2016 JP 2016029897
(71) Applicant: JTEKT CORPORATION, Osaka-shi, Osaka 542-8502 (JP)
(72) Inventor: KANDA, Naotake, Osaka-shi, Osaka, 542-8502 (JP); YOSHIKAWA, Hiroshi, Osaka-shi, Osaka, 542-8502 (JP); TAKEUCHI, Taiki, Osaka-shi, Osaka, 542-8502 (JP); SHIBATA, Yoshiyuki, Osaka-shi, Osaka, 542-8502 (JP)
(74) Representative: Winter, Brandl, Fürniss, Hübner, Röss, Kaiser, Polte - Partnerschaft mbB

(57) **Abstract**

A rotor 10 includes a core 12 and permanent magnets 20. Each permanent magnet 20 is embedded in the core 12. Each permanent magnet 20 forming one of the magnetic poles of the rotor 10 includes a first portion 22 and a second portion 24. The first and second portions 22 and 24 extend inward in a radial direction Dr and also extend away from a stator-facing surface OS of the rotor 10 in an axial direction Da. Regions of the first and second portions 22 and 24 away from the stator-facing surface OS are connected to a bottom 28. An inner peripheral surface 22a of the first portion 22, an inner peripheral surface 24a of the second portion 24, and an inner peripheral surface 28a of the bottom 28 form one of the magnetic poles of the rotor 10.

## Description

### BACKGROUND OF THE INVENTION

### 1. Field of the Invention

The invention relates generally to rotors for axial gap type dynamo-electric machines. More particularly, the invention relates to a rotor for an axial gap type dynamo-electric machine that faces a stator in the axial direction of the rotor.

### 2. Description of the Related Art

Japanese Patent No. 4720982, for example, discloses a rotor for an axial gap type dynamo-electric machine that includes plate-like permanent magnets facing a stator in the axial direction of the rotor.

The number of flux linkages of the axial gap type dynamo-electric machine depends on the area of a stator-facing surface of each permanent magnet forming one of the magnetic poles of the rotor. To increase the number of flux linkages, the area of a stator-facing surface of the rotor needs to be increased. This unfortunately leads to an increase in size of the resulting motor.

### SUMMARY OF THE INVENTION

An object of the invention is to provide a rotor for an axial gap type dynamo-electric machine that would enable an increase in the number of flux linkages if the area of a stator-facing surface of the rotor is limited.

An aspect of the invention provides a rotor for an axial gap type dynamo-electric machine. The rotor faces a stator in an axial direction of the rotor. The rotor includes a core and a permanent magnet. The permanent magnet forms a particular magnetic pole of the rotor. The permanent magnet includes a first portion and a second portion. The first and second portions extend through the core in a direction intersecting a plane perpendicular to the axial direction of the rotor. The first and second portions face each other in a circumferential direction of the rotor. Regions of the first and second portions facing each other in the circumferential direction of the rotor form the particular magnetic pole.

In this arrangement, the first and second portions extend through the core in the axial direction and face each other in the circumferential direction, and the regions of the first and second portions facing each other form the particular magnetic pole. This increases the area of the particular magnetic pole without increasing the area of a portion of a stator-facing surface of the rotor allocated to the particular magnetic pole. Consequently, this arrangement would increase the number of flux linkages even if the area of the stator-facing surface of the rotor is limited.

The permanent magnet forming the particular magnetic pole may include a first region closest to the stator in the axial direction of the rotor, and a second region farther away from the stator than the first region in the axial direction of the rotor. The second region may include a sub-region located inward of the particular magnetic pole in the circumferential direction of the rotor.

Even if the axial length of the rotor is limited, the surface area of the magnetic pole in this arrangement would be larger than when the sub-region located inward of the particular magnetic pole is not provided.

The permanent magnet forming the particular magnetic pole may have a first length and a second length in an orientation direction. The first length may be a length of a region of the permanent magnet adjacent to the stator in the direction intersecting the plane perpendicular to the axial direction of the rotor. The second length may be a length of a region of the permanent magnet away from the stator in the direction intersecting the plane perpendicular to the axial direction of the rotor. The first length may be longer than the second length.

Stator-induced magnetic fluxes exerted on the permanent magnet include magnetic fluxes adjacent to the stator in the direction intersecting the plane perpendicular to the axial direction of the rotor, and magnetic fluxes away from the stator in the direction intersecting the plane perpendicular to the axial direction of the rotor. The number of magnetic fluxes adjacent to the stator tends to be larger than the number of magnetic fluxes away from the stator. Thus, a stator-facing portion of the permanent magnet is likely to demagnetize because of its location. The above arrangement, however, increases the length of the stator-facing portion of the permanent magnet in the orientation direction so as to enable an increase in permeance coefficient. This eventually reduces demagnetization.

End faces of the first and second portions outward in the radial direction of the rotor may be exposed through the core.

Suppose that the end faces of the first and second portions located outward in the radial direction of the rotor are embedded in the core. In this case, a portion of the core radially outward of the first and second portions will be a magnetic flux short-circuiting path between the magnetic poles adjacent to each other. This results in an increase in leakage flux that passes through the short-circuiting path without providing linkage with a stator coil. In the above arrangement, however, the end faces of the first and second portions outward in the radial direction of the rotor are exposed through the core, thus reducing leakage flux.

A cylindrical member may be fitted to an outer side of the core in the radial direction. The cylindrical member may have a lower magnetic permeability than the core.

In this arrangement, the magnetic permeability of the cylindrical member is lower than the magnetic permeability of the core. This reduces the number of magnetic fluxes passing through the magnetic flux short-circuiting path formed by the cylindrical member and located between the magnetic poles adjacent to each other. Furthermore, the cylindrical member prevents centrifugal force-induced radially outward displacement of the permanent magnet, although the radially outer end face of the permanent magnet is exposed through the core.

The first and second portions may be connected to each other at an inner connection located inward in the radial direction of the rotor.

Suppose that the first and second portions are separated from each other, with no inner connection provided therebetween. In this case, a magnetic flux in a region of the rotor where the first and second portions face each other may pass through a radially inner portion of the core where the first and second portions face each other, resulting in leakage flux. This may eventually reduce flux linkage with the stator coil. The above arrangement, however, reduces leakage flux because the inner connection is provided.

The first and second portions may be connected to each other at an outer connection located outward in the radial direction of the rotor. An outer peripheral surface of the outer connection may face the core. The outer peripheral surface may be an end face of the outer connection located outward in the radial direction of the rotor. In this arrangement, the surface area of the magnetic pole is larger than when no outer connection is provided. This enables an increase in flux linkage with the stator coil.

Radially inner ends of the first and second portions may be exposed through the core without being connected to each other.

Unlike the case where the radially inner ends of the first and second portions are embedded in the core without being exposed therethrough, this arrangement prevents a magnetic flux in a region of the rotor where the first and second portions circumferentially face each other from passing through a portion of the core radially inward of the first and second portions to reach the magnetic pole of another permanent magnet without going through the stator coil. Thus, this arrangement reduces such leakage flux.

A region of the first portion facing the second portion and the region of the second portion facing the first portion may be inclined to one side relative to a radial direction of the rotor. The regions of the first and second portions may be inclined at least at an end face of the rotor facing the stator.

With rotation of the rotor, a portion of the rotor perpendicular to the axial direction and surrounded by the regions of the first and second portions facing each other starts facing the stator coil, and then the area of the portion of the rotor facing the stator coil changes. In the above arrangement, the change in the area of the portion of the rotor facing the stator coil is smaller than when the regions of the first and second portions facing each other are not inclined to one side relative to the radial direction of the rotor. In the above arrangement, a change in the area of the stator coil-facing portion of the rotor immediately before this portion stops facing the stator coil is also reduced. This arrangement thus reduces the rate of change in flux linkage of the stator coil when the magnetic pole starts facing the stator coil and when the area of the magnetic pole facing the stator coil decreases. Consequently, space harmonics are eventually further reduced than when the rate of change in flux linkage of the stator coil is steep.

The first portion and the second portion extending in the direction intersecting the plane perpendicular to the axial direction of the rotor may respectively include a first stator-facing end face and a second stator-facing end face. Portions of the first and second stator-facing end faces located outward in a radial direction of the rotor may be at least partially covered with the core in the axial direction of the rotor. A distance between a stator-facing surface of the rotor and the portions of the first and second stator-facing end faces at least partially covered with the core may increase as the first and second stator-facing end faces extend toward an inner portion of the particular magnetic pole in the circumferential direction of the rotor.

When regions of the first and second portions circumferentially facing each other form the magnetic pole, the regions of the first and second portions function as the magnetic pole, but the stator-facing end faces virtually do not function as the magnetic pole. Some of the magnetic fluxes in a region of the rotor where the first and second portions circumferentially face each other, however, pass through a portion of the core between the stator-facing surface of the rotor and at least portions of the stator-facing end faces so as to provide linkage with the stator. Accordingly, the number of flux linkages of the stator coil at the time when the stator-facing end faces of the permanent magnet start facing the stator coil increases as the length of the portion of the core between the stator-facing surface of the rotor and the stator-facing end faces in the axial direction increases. This is because the longer this length, the smaller the magnetic resistance of the portion of the core, resulting in an increase in the number of magnetic fluxes that pass through the portion of the core and provide linkage with the stator coil. If the length of the portion of the core is constant, this will result in a small change in the number of flux linkages between the time when the stator-facing end faces start facing the stator coil and a point in time prior to the time when the regions of the first and second portions facing each other start facing the stator coil. This small change in the number of flux linkages leads to a sudden increase in flux linkage when the regions of the first and second portions facing each other start facing the stator coil. In the above arrangement, however, the length increases as the stator-facing end faces extend toward the inner portion of the magnetic pole. This enables a gradual increase in flux linkage of the stator coil between the time when the stator-facing end faces start facing the stator coil and the time when the surfaces of the first and second portions facing each other start facing the stator coil. Thus, the above arrangement eventually reduces space harmonics.

A material for the permanent magnet may be a mixture of magnetic particles and a resin. Thus, the permanent magnet is relatively easily formed into any desired shape.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a perspective view of a rotor for an axial gap type dynamo-electric machine according to a first embodiment of the invention;
FIG. 2 is a perspective view of a permanent magnet according to the first embodiment, illustrating the shape of the permanent magnet;
FIG. 3 is a perspective view of the permanent magnet according to the first embodiment, schematically illustrating magnetic fluxes of the permanent magnet;
FIG. 4 is a plan view of a cylindrical member according to the first embodiment, illustrating how the cylindrical member functions;
FIG. 5 is a perspective view of a rotor for an axial gap type dynamo-electric machine according to a second embodiment of the invention;
FIG. 6 is a perspective view of a rotor for an axial gap type dynamo-electric machine according to a third embodiment of the invention;
FIG. 7 is a perspective view of a permanent magnet according to the third embodiment, illustrating the shape of the permanent magnet;
FIG. 8A is a perspective view of the rotor according to the third embodiment;
FIG. 8B is a cross-sectional view of the rotor and a stator according to the third embodiment;
FIG. 9A is a plan view of a rotor for an axial gap type dynamo-electric machine according to a fourth embodiment of the invention;
FIG. 9B is a diagram illustrating how the shape of a permanent magnet of the rotor according to the fourth embodiment is determined;
FIG. 10 is a perspective view of a rotor for an axial gap type dynamo-electric machine according to a fifth embodiment of the invention;
FIG. 11 is an enlarged side view of a portion of a permanent magnet according to the fifth embodiment;
FIG. 12 is a perspective view of a rotor for an axial gap type dynamo-electric machine according to a sixth embodiment of the invention;
FIG. 13 is a perspective view of a rotor for an axial gap type dynamo-electric machine according to a seventh embodiment of the invention;
FIG. 14 is a perspective view of a rotor for an axial gap type dynamo-electric machine according to a variation of the embodiments of the invention;
FIG. 15 is a perspective view of a rotor for an axial gap type dynamo-electric machine according to another variation of the embodiments of the invention; and
FIG. 16 is a perspective view of a rotor for an axial gap type dynamo-electric machine according to still another variation of the embodiments of the invention.

### DETAILED DESCRIPTION OF EMBODIMENTS

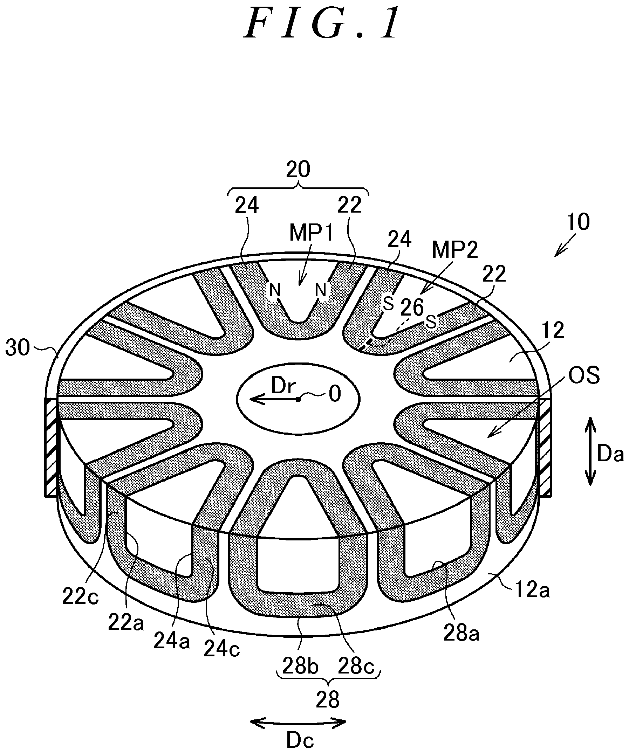

Embodiments of the invention will be described below with reference to the accompanying drawings. FIG. 1 illustrates the structure of a rotor 10 for an axial gap type dynamo-electric machine according to a first embodiment of the invention. The axial gap type dynamo-electric machine according to the first embodiment is incorporated into an electric power steering system (EPS). As illustrated in FIG. 1, the rotor 10 includes: a core 12 that is a dust core; and permanent magnets 20 embedded in the core 12. Each permanent magnet 20 is a mixture of magnetic particles and a resin. Specifically, providing each permanent magnet 20, for example, may involve heating the mixture of the magnetic particles and the resin so as to fluidize the mixture and injection-molding the fluidized mixture using a metal mold, or may involve compression-molding a mixture obtained by coating magnetic particles with resin. Each permanent magnet 20 molded is assembled to the core 12, thus providing the rotor 10. The rotor 10 includes 10 magnetic poles, i.e., such as magnetic poles MP1, M2 and etc. formed by the permanent magnets 20. The magnetic poles MP1 and MP2 illustrated in FIG. 1 are the north and south poles, respectively.

The permanent magnets 20 forming the magnetic poles such as MP1, MP2 and etc. of the rotor 10 each include a first portion 22 and a second portion 24 that extend in a radial direction Dr of the rotor 10. As used herein, the term "radial direction Dr" refers to any direction extending radially from a central axis O of the rotor 10. In FIG. 1, the radial direction Dr extending leftward from the central axis O, in particular, is illustrated. The first and second portions 22 and 24 of each permanent magnet 20 are connected to each other at an inner connection 26 located inward in the radial direction Dr. The inner connection 26 is a portion of the magnetic pole formed by the first and second portions 22 and 24 and centrally located in a circumferential direction Dc of the rotor 10. Assuming that the outer edge of a cross section of the rotor 10 perpendicular to an axial direction Da is a circle, the term "circumferential direction Dc of the rotor 10" refers to the direction of a tangent to each point on the circle. This means that the circumferential direction Dc changes depending on where the circumferential direction Dc is defined. In FIG. 1, the circumferential direction Dc defined for the lower portion of the rotor 10, in particular, is illustrated.

The first and second portions 22 and 24 of each permanent magnet 20 include end faces that are perpendicular to the axial direction Da of the rotor 10 and adjacent to a surface of the rotor 10 facing a stator. The surface of the rotor 10 facing the stator will hereinafter be referred to as a "stator-facing surface OS". The first and second portions 22 and 24 of each permanent magnet 20 are exposed through the rotor 10 at the end faces thereof. An inner peripheral surface 22a of the first portion 22 and an inner peripheral surface 24a of the second portion 24 face each other in the circumferential direction Dc of the rotor 10. The stator-facing surface OS is a surface of the rotor 10 perpendicular to the axial direction Da.

The first and second portions 22 and 24 of each permanent magnet 20 extend inward in the axial direction Da of the rotor 10 from the stator-facing surface OS and are connected to a bottom 28 of the permanent magnet 20. Each bottom 28 includes a region of the magnetic pole inward of the inner peripheral surface 22a of the first portion 22 and the inner peripheral surface 24a of the second portion 24 in the circumferential direction Dc. In other words, each bottom 28 includes a region located between the inner peripheral surface 22a of the first portion 22 and the inner peripheral surface 24a of the second portion 24 in the circumferential direction Dc.

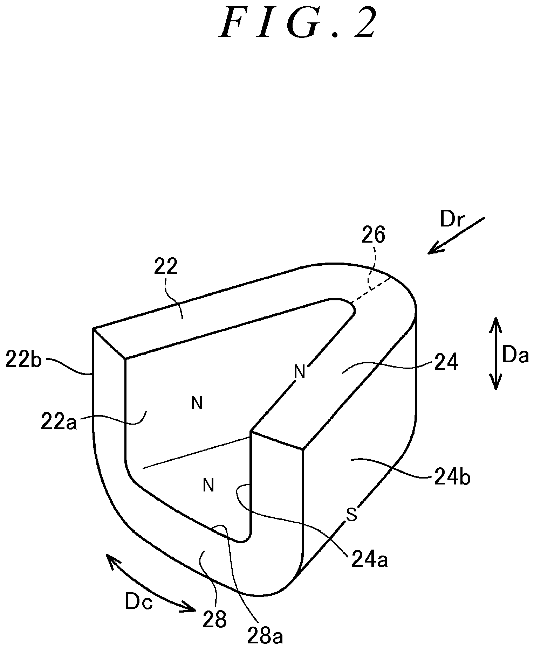

FIG. 2 illustrates the shape of the permanent magnet 20 forming one of the magnetic poles such as MP1, MP2 and etc. As illustrated in FIG. 2, the inner peripheral surface 22a of the first portion 22, the inner peripheral surface 24a of the second portion 24, and an inner peripheral surface 28a of the bottom 28 form one of the magnetic poles of the rotor 10. As illustrated in FIG. 2, a cross section of the first and second portions 22 and 24 perpendicular to the axial direction Da has a V-shape.

As illustrated in FIG. 1, each permanent magnet 20 is also exposed at an outer peripheral surface 12a of the core 12. A cylindrical member 30 is fitted to the outer side of the core 12 in the radial direction. The inner and outer peripheral surfaces of the cylindrical member 30 each have a cylindrical shape. The cylindrical member 30 covers: end faces of each permanent magnet 20 located outward in the radial direction Dr, i.e., an end face 22c of the first portion 22, an end face 24c of the second portion 24, and an end face 28c of the bottom 28; and the outer peripheral surface 12a of the core 12. The cylindrical member 30 has a lower magnetic permeability than the core 12.

The effects of the first embodiment will be described below. The inner peripheral surface 22a of the first portion 22, the inner peripheral surface 24a of the second portion 24, and the inner peripheral surface 28a of the bottom 28 of each permanent magnet 20 form one of the magnetic poles of the rotor 10. Thus, the inner peripheral surfaces 22a and 24a of the first and second portions 22 and 24 increase the surface area of the permanent magnet 20 forming one of the magnetic poles, without any increase in the area of a portion of the stator-facing surface OS of the rotor 10 allocated to the magnetic pole. This eventually increases the surface area of the magnetic pole. Consequently, the first embodiment would increase the number of flux linkages if the area of the stator-facing surface OS of the rotor 10 is limited.

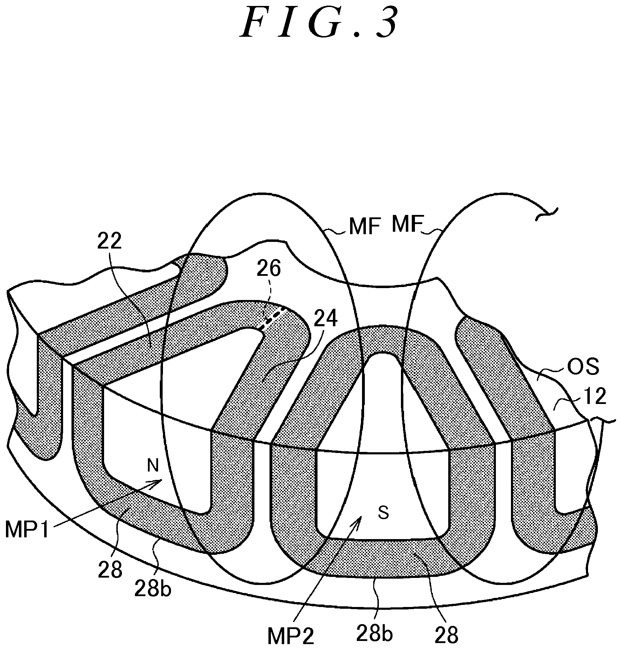

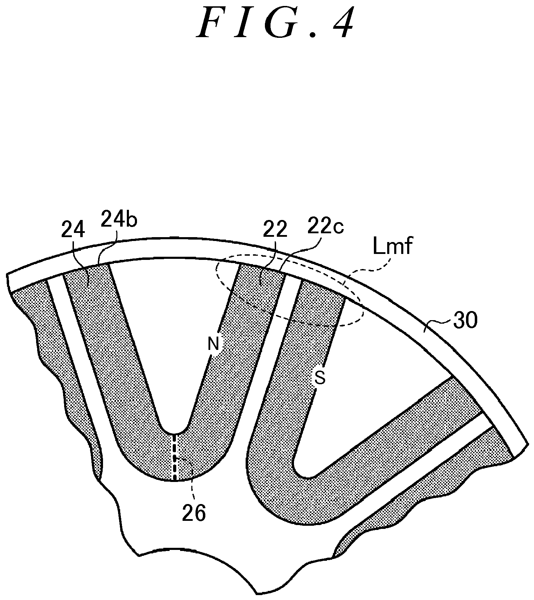

The first embodiment thus described further achieves effects described below. (1) Because each permanent magnet 20 includes the bottom 28, the surface area of each magnetic pole of the rotor 10 is larger than when each permanent magnet 20 includes no bottom 28.
(2) Each bottom 28 includes an outer peripheral surface 28b that faces the core 12 in the axial direction Da. FIG. 3 schematically illustrates how magnetic fluxes MF of the rotor 10 flow. As illustrated in FIG. 3, the magnetic fluxes MF emanating from the magnetic poles MP1 and MP3, each forming the north pole, flow out of the rotor 10 through the stator-facing surface OS of the rotor 10, and then enter the magnetic pole MP2 forming the south pole. Subsequently, the magnetic fluxes MF emanating from the outer peripheral surface 28b of the bottom 28 of the permanent magnet 20, forming the magnetic pole MP2, enter the outer peripheral surfaces 28b of the bottoms 28 of the permanent magnets 20, forming the magnetic poles MP1 and MP3, through the core 12. Thus, magnetic resistance of magnetic paths is smaller than when the outer peripheral surfaces 28b are exposed through the core 12. This results in an increase in flux linkage of a stator coil.
(3) Suppose that the end face 22c of the first portion 22 and the end face 24c of the second portion 24 located outward in the radial direction Dr are embedded in the core 12. In this case, a portion of the core 12 located outward of the end faces 22c and 24c in the radial direction Dr will be a magnetic flux short-circuiting path between the magnetic poles adjacent to each other, such as the magnetic poles MP1 and MP2, resulting in an increase in leakage flux that provides no linkage with the stator coil. In this embodiment, however, the end face 22c of the first portion 22 and the end face 24c of the second portion 24 located outward in the radial direction Dr are exposed through the core 12 as illustrated in FIG. 1, thus reducing leakage flux.
(4) The cylindrical member 30 is fitted to the outer side of the core 12 in the radial direction. The cylindrical member 30 has a lower magnetic permeability than the core 12, so that the number of magnetic fluxes through a magnetic flux short-circuiting path Lmf between the adjacent magnetic poles illustrated in FIG. 4 is smaller than when no cylindrical member 30 is fitted to the core 12. Although the end faces 22c and 24c are exposed at the surface of the core 12 outward in the radial direction Dr, the cylindrical member 30 prevents centrifugal force-induced outward displacement of each permanent magnet 20 in the radial direction Dr.
(5) Suppose that the first and second portions 22 and 24 are separated from each other. In this case, a magnetic flux is likely to pass between the inner peripheral surfaces 22a and 24a of the first and second portions 22 and 24 and between the outer peripheral surfaces 22b and 24b of the first and second portions 22 and 24 through a portion of the core 12 inward in the radial direction Dr where the first and second portions 22 and 24 face each other. This magnetic flux is leakage flux because it does not provide linkage with the stator coil. The first embodiment, however, connects the first and second portions 22 and 24 to each other at the inner connection 26 located inward in the radial direction Dr as illustrated in FIG. 1, thus enabling a reduction in leakage flux.
(6) The material for each permanent magnet 20 is the mixture of the magnetic particles and the resin. Thus, each permanent magnet 20 is relatively easily formed into any desired shape.

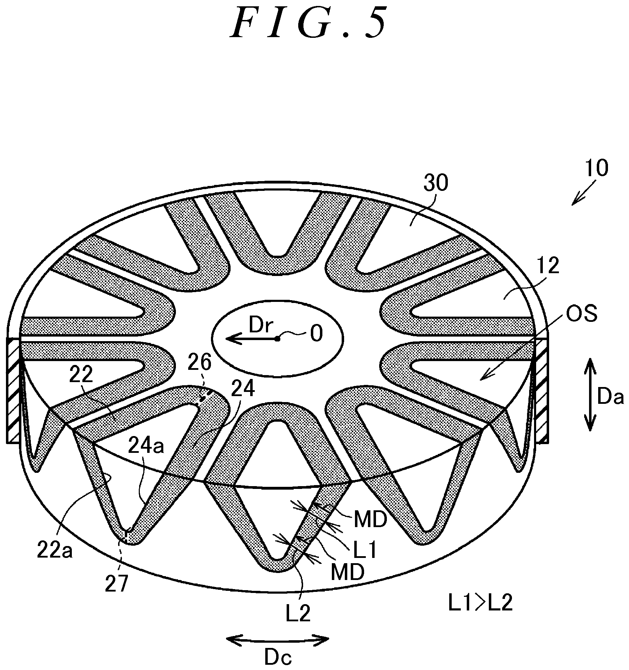

A second embodiment of the invention will be described below with reference to FIG. 5, with attention focused on differences between the first embodiment and the second embodiment.

FIG. 5 illustrates the structure of the rotor 10 according to the second embodiment. For convenience, components of the rotor 10 in FIG. 5 corresponding to those of the rotor 10 in FIG. 1 are identified by the same reference characters. As illustrated in FIG. 5, the rotor 10 according to this embodiment is configured so that as the first and second portions 22 and 24 extend away from the stator-facing surface OS in the axial direction Da, the first and second portions 22 and 24 extend to the inner portion of the magnetic pole in the circumferential direction Dc and are connected to each other at an inner connection 27. The first and second portions 22 and 24 each have a length L1 and a length L2 in an orientation direction MD. The length L1 is the length of a region of each of the first and second portions 22 and 24 adjacent to the stator-facing surface OS. The length L2 is the length of a region of each of the first and second portions 22 and 24 located away from the stator-facing surface OS. The length L1 is longer than the length L2. Specifically, as the first and second portions 22 and 24 extend away from the stator-facing surface OS in the axial direction Da, the length of the region of each of the first and second portions 22 and 24 in the orientation direction MD decreases gradually. As used herein, the term "orientation direction" refers to a direction parallel to the magnetic moment direction of each permanent magnet 20.

The effects of the second embodiment will be described below. A portion of each permanent magnet 20 adjacent to the stator-facing surface OS tends to receive a larger amount of magnetic flux from the stator than a portion of each permanent magnet 20 away from the stator-facing surface OS in the axial direction Da. This makes it likely that the portion of each permanent magnet 20 adjacent to the stator-facing surface OS will demagnetize because of its location. The second embodiment, however, increases the length of the portion of each permanent magnet 20 located adjacent to the stator-facing surface OS and extending in the orientation direction MD, thus enabling an increase in permeance coefficient. This eventually reduces demagnetization.

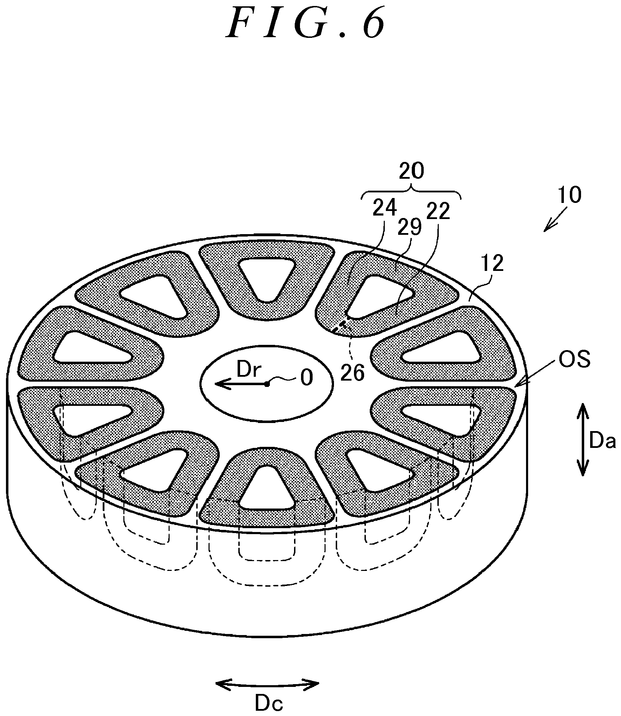

A third embodiment of the invention will be described below with reference to FIGS. 6 to 8B, with attention focused on differences between the first embodiment and the third embodiment.

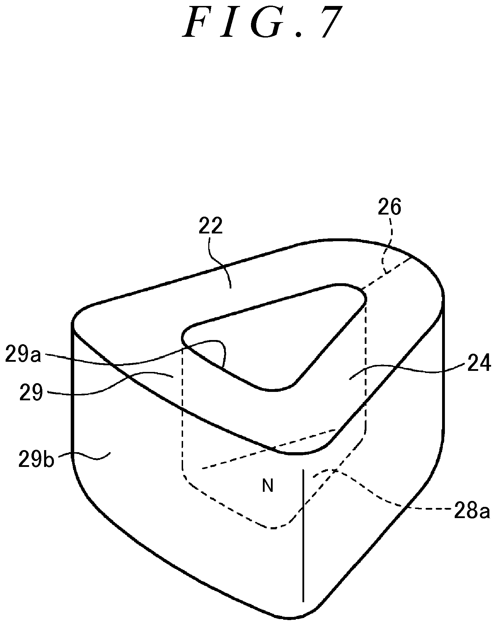

FIG. 6 illustrates the structure of the rotor 10 according to the third embodiment. For convenience, components of the rotor 10 in FIG. 6 corresponding to those of the rotor 10 in FIG. 1 are identified by the same reference characters. As illustrated in FIG. 6, the rotor 10 according to this embodiment is configured so that the first and second portions 22 and 24 of each permanent magnet 20 are connected to each other at an outer connection 29 located outward in the radial direction Dr. FIG. 7 illustrates the structure of the permanent magnet 20 forming one of the magnetic poles of the rotor 10. As illustrated in FIG. 7, an inner peripheral surface 29a of the outer connection 29 of each permanent magnet 20 also forms the magnetic pole of the rotor 10. As illustrated in FIG. 6, an outer peripheral surface 29b of the outer connection 29 is embedded in the core 12. The rotor 10 according to this embodiment includes no cylindrical member 30.

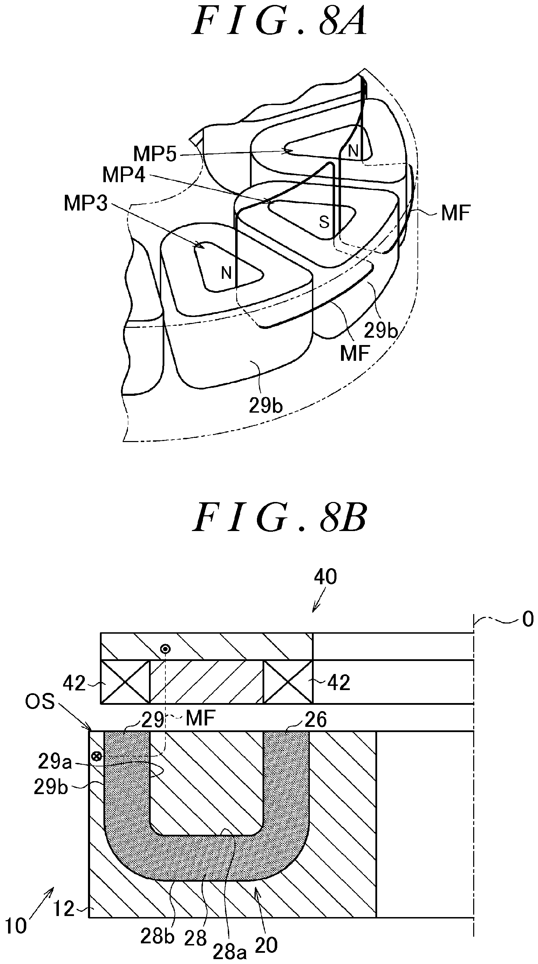

The effects of the third embodiment will be described below. As illustrated in FIG. 8A, the magnetic fluxes MF emanating from the magnetic poles MP3 and MP5, each forming the north pole, flow out of the rotor 10 through the stator-facing surface OS of the rotor 10, and then enter the magnetic pole MP4 forming the south pole. Subsequently, the magnetic fluxes MF emanating from the outer peripheral surface 29b of the outer connection 29 of the permanent magnet 20, forming the magnetic pole MP4, enter the outer peripheral surfaces 29b of the outer connections 29 of the permanent magnets 20, forming the magnetic poles MP3 and MP5, through the core 12. FIG. 8B is a cross-sectional view of the rotor 10 and a stator 40, with the rotor 10 facing the stator 40.

This arrangement enables effective use of the outer connection 29 of each permanent magnet 20. This eventually increases the amount of magnetic flux that provides linkage with a stator coil 42. A portion of the core 12 facing the outer peripheral surfaces 29b of the outer connections 29 forms magnetic paths for magnetic fluxes that emanate from the outer peripheral surface 29b of the outer connection 29 of the permanent magnet 20 forming the magnetic pole MP4 and enter the outer peripheral surfaces 29b of the outer connections 29 of the permanent magnets 20 forming the magnetic poles MP3 and MP5. Thus, the magnetic paths for the magnetic fluxes MF have lower magnetic resistance than when the portion of the core 12 facing the outer peripheral surfaces 29b of the outer connections 29 also faces a non-magnetic member. Consequently, the amount of magnetic flux that provides linkage with the stator coil 42 is larger than when the portion of the core 12 facing the outer peripheral surfaces 29b of the outer connections 29 also faces a non-magnetic member.

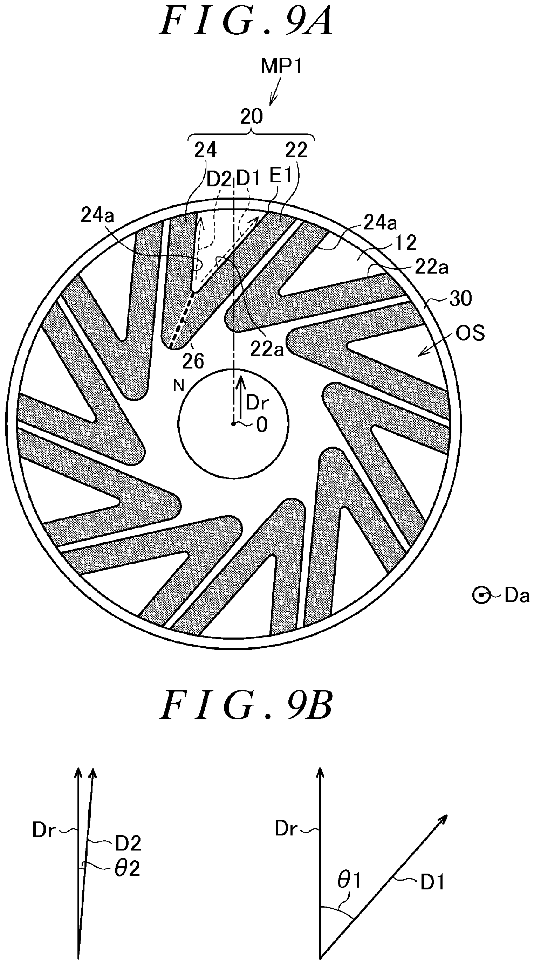

A fourth embodiment of the invention will be described below with reference to FIGS. 9A and 9B, with attention focused on differences between the first embodiment and the fourth embodiment.

FIG. 9A illustrates the structure of the rotor 10 according to the fourth embodiment. For convenience, components of the rotor 10 in FIG. 9A corresponding to those of the rotor 10 in FIG. 1 are identified by the same reference characters. FIG. 9A is a plan view of the rotor 10 taken along a plane flush with the stator-facing surface OS and perpendicular to the axial direction Da. As illustrated in FIG. 9A, the rotor 10 according to this embodiment is configured so that the inner peripheral surfaces 22a and 24a of the first and second portions 22 and 24 of each permanent magnet 20 are inclined to one side relative to the radial direction Dr. As illustrated in FIG. 9B, the inner peripheral surface 22a of the first portion 22 extends in a direction D1, and the inner peripheral surface 24a of the second portion 24 extends in a direction D2. The direction D1 forms an angle θ1 with the radial direction Dr on the plane perpendicular to the axial direction Da. The direction D2 forms an angle θ2 with the radial direction Dr on the plane perpendicular to the axial direction Da. The angles θ1 and θ2 are directed to one side relative to the radial direction Dr.

The effects of the fourth embodiment will be described below. Counterclockwise rotation of the rotor 10 illustrated in FIG. 9A causes an end E1 of the first portion 22 to start facing a stator coil, resulting in an increase in flux linkage of the stator coil induced by the magnetic pole MP1. Note that a change in the area of a portion of the rotor 10 located between the inner peripheral surfaces 22a and 24a of the first and second portions 22 and 24 and facing the stator coil is small when the angle θ1 illustrated in FIG. 9B is relatively large, as compared with the time when the angle θ1 is relatively small. This means that the rate of increase in flux linkage of a particular stator coil from the time when the magnetic pole MP1 of the rotor 10 according to the fourth embodiment starts facing the stator coil is lower than the rate of increase in flux linkage of a particular stator coil from the time when the magnetic pole MP1 of the rotor 10 according to the first embodiment starts facing the stator coil.

Clockwise rotation of the rotor 10 illustrated in FIG. 9A causes the inner peripheral surface 24a of the second portion 24 to start facing the stator coil, resulting in an increase in flux linkage of the stator coil induced by the magnetic pole MP1. Note that a change in the area of a portion of the rotor 10 located between the inner peripheral surfaces 22a and 24a of the first and second portions 22 and 24 and facing the stator coil is smaller than when the angle θ2 illustrated in FIG. 9B is directed to the opposite side relative to the radial direction Dr. This means that the rate of increase in flux linkage of a particular stator coil from the time when the magnetic pole MP1 of the rotor 10 according to the fourth embodiment starts facing the stator coil is lower than the rate of increase in flux linkage of a particular stator coil from the time when the magnetic pole MP1 of the rotor 10 according to the first embodiment starts facing the stator coil.

When the rotor 10 rotates in the counterclockwise direction, flux linkage of the stator coil induced by the magnetic pole MP1 increases and then decreases. The rate of decrease in flux linkage of the stator coil in this case is low for the same reason as that described for the low rate of increase in flux linkage of the stator coil when the rotor 10 rotates in the clockwise direction. When the rotor 10 rotates in the clockwise direction, flux linkage of the stator coil induced by the magnetic pole MP1 increases and then decreases. The rate of decrease in flux linkage of the stator coil in this case is low for the same reason as that described for the low rate of increase in flux linkage of the stator coil when the rotor 10 rotates in the counterclockwise direction.

Accordingly, this embodiment reduces the rate of change in flux linkage of the stator coil when the magnetic pole starts facing the stator coil and when the area of the magnetic pole facing the stator coil decreases. Thus, space harmonics are eventually further reduced than when the rate of change in flux linkage of the stator coil is steep.

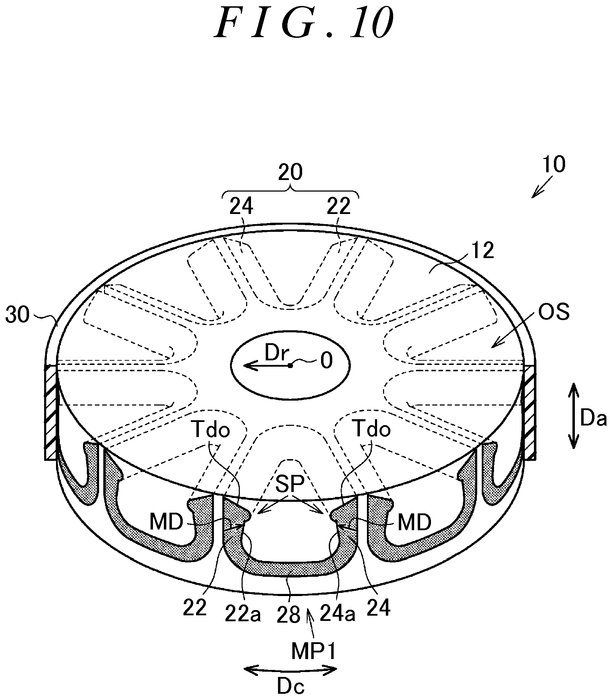

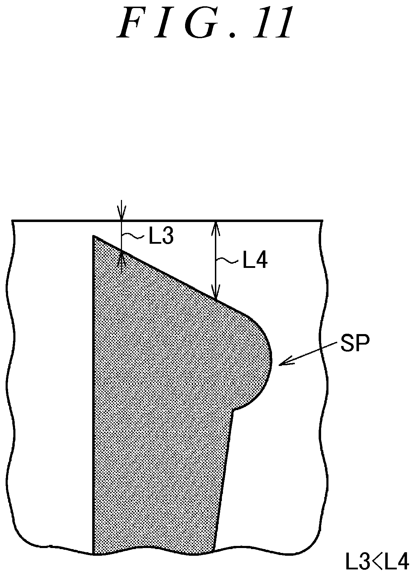

A fifth embodiment of the invention will be described below with reference to FIGS. 10 and 11, with attention focused on differences between the first embodiment and the fifth embodiment.

FIG. 10 illustrates the structure of the rotor 10 according to the fifth embodiment. For convenience, components of the rotor 10 in FIG. 10 corresponding to those of the rotor 10 in FIG. 1 are identified by the same reference characters. In this embodiment, portions of each permanent magnet 20 adjacent to the stator-facing surface OS are embedded in the core 12 and face the core 12. As illustrated in FIG. 11, the distance between the stator-facing surface OS and an end face Tdo of the first portion 22 adjacent to the stator-facing surface OS in the axial direction Da gradually increases as the end face Tdo extends toward the inner portion of the magnetic pole in the circumferential direction Dc. In the example illustrated in FIG. 11, a distance L3 between the stator-facing surface OS and a portion of the end face Tdo outward in the circumferential direction Dc is shorter than a distance L4 between the stator-facing surface OS and a portion of the end face Tdo inward in the circumferential direction Dc.

Similarly, the distance between the stator-facing surface OS and the end face Tdo of the second portion 24 adjacent to the stator-facing surface OS in the axial direction Da also gradually increases as the end face Tdo extends toward the inner portion of the magnetic pole in the circumferential direction Dc.

The effects of the fifth embodiment will be described below.

The inner peripheral surfaces 22a and 24a of the first and second portions 22 and 24 of each permanent magnet 20 form the magnetic pole. Thus, the end faces Tdo virtually do not function as the magnetic pole. Some of the magnetic fluxes in a region of the rotor 10 where the first and second portions 22 and 24 face each other in the circumferential direction Dc pass through a portion of the core 12 between the stator-facing surface OS and the end faces Tdo so as to provide linkage with the stator. Accordingly, the number of flux linkages of the stator coil at the time when the ends of each permanent magnet 20 adjacent to the stator-facing surface OS start facing the stator coil increases as the length of the portion of the core 12 between the stator-facing surface OS and the end faces Tdo in the axial direction Da increases. This is because the longer this length, the smaller the magnetic resistance of the portion of the core 12, resulting in an increase in the number of magnetic fluxes that pass through the portion of the core 12 and provide linkage with the stator coil. If the length of the portion of the core 12 is constant, this will result in a small change in the number of flux linkages between the time when the end faces Tdo start facing the stator coil and a point in time prior to the time when the inner peripheral surfaces 22a and 24a of the first and second portions 22 and 24 start facing the stator coil. This small change in the number of flux linkages leads to a sudden increase in the number of flux linkages when the inner peripheral surfaces 22a and 24a of the first and second portions 22 and 24 start facing the stator coil.

In this embodiment, however, the length increases as the end faces Tdo extend toward the inner portion of the magnetic pole. This enables a gradual increase in flux linkage of the stator coil between the time when the end faces Tdo start facing the stator coil and the time when the inner peripheral surfaces 22a and 24a of the first and second portions 22 and 24 start facing the stator coil. Thus, this embodiment eventually reduces space harmonics.

In this embodiment, the length of each of the first and second portions 22 and 24 in the orientation direction MD gradually decreases as each of the first and second portions 22 and 24 extends away from the stator-facing surface OS in the axial direction Da. This enables an increase in the length of a demagnetization-prone portion of each permanent magnet 20 located adjacent to the stator-facing surface OS and extending in the orientation direction MD.

In this embodiment, regions of the first and second portions 22 and 24 facing each other in the circumferential direction Dc and located adjacent to the stator-facing surface OS are provided with protrusions SP. Thus, the lengths of the regions of the first and second portions 22 and 24 located adjacent to the stator-facing surface OS and extending in the orientation direction MD are longer than when no protrusions SP are provided.

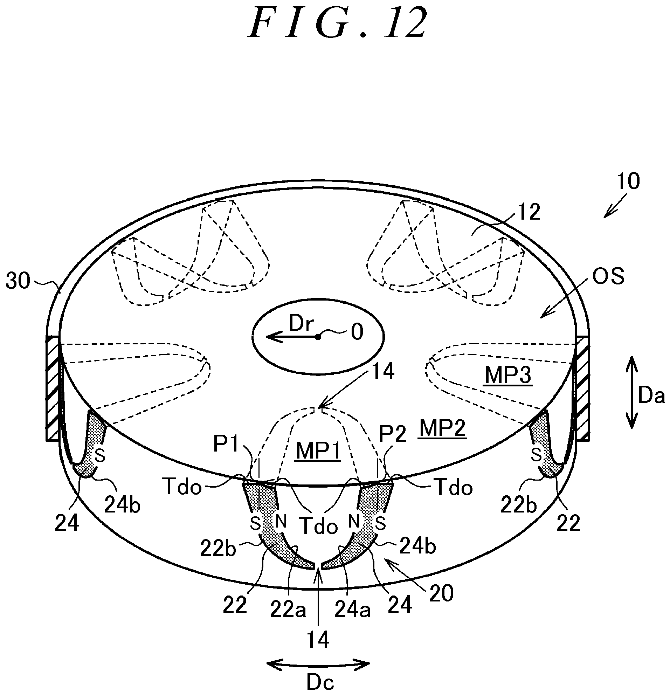

A sixth embodiment of the invention will be described below with reference to FIG. 12, with attention focused on differences between the first embodiment and the sixth embodiment.

FIG. 12 illustrates the structure of the rotor 10 according to the sixth embodiment. For convenience, components of the rotor 10 in FIG. 12 corresponding to those of the rotor 10 in FIG. 1 are identified by the same reference characters. In this embodiment, the magnetic poles of the rotor 10 formed by the inner peripheral surfaces 22a and 24a of the first and second portions 22 and 24 are different from the magnetic poles of the rotor 10 formed by the outer peripheral surfaces 22b and 24b of the first and second portions 22 and 24. Specifically, the inner peripheral surfaces 22a and 24a of the first and second portions 22 and 24 form the north poles, and the outer peripheral surfaces 22b and 24b of the first and second portions 22 and 24 form the south poles. Note that as illustrated in FIG. 12, the magnetic pole MP2, for example, is formed by the outer peripheral surface 24b of the second portion 24 forming the magnetic pole MP1, and the outer peripheral surface 22b of the first portion 22 forming the magnetic pole MP3. In this embodiment, surfaces of the first and second portions 22 and 24 that form the same magnetic pole and come closer to each other as they extend away from the stator-facing surface OS in the axial direction Da are defined as the inner peripheral surfaces 22a and 24a, a surface of each first portion 22 opposite to the inner peripheral surface 22a is defined as the outer peripheral surface 22b, and a surface of each second portion 24 opposite to the inner peripheral surface 24a is defined as the outer peripheral surface 24b.

Each permanent magnet 20 illustrated in FIG. 12 includes: a point P1 where the distance between the stator-facing surface OS and the end face Tdo of the first portion 22 adjacent to the stator-facing surface OS in the axial direction Da is the shortest; and a point P2 where the distance between the stator-facing surface OS and the end face Tdo of the second portion 24 adjacent to the stator-facing surface OS in the axial direction Da is the shortest. The points P1 and P2 each define a boundary between one magnetic pole and another at an end of each permanent magnet 20 located adjacent to the stator-facing surface OS in the axial direction Da and outward in the radial direction Dr. In this arrangement, the length of a portion of the core 12 facing the end face Tdo in the axial direction Da increases as the end face Tdo extends toward the inner portion of the magnetic pole MP1. Similarly to the fifth embodiment, this feature serves to smooth a change in the number of flux linkages when the end face Tdo faces the stator coil.

In this embodiment, the first and second portions 22 and 24 of each permanent magnet 20 forming the north pole come closer to each other as they extend inward in the radial direction Dr, but ends of the first and second portions 22 and 24 inward in the radial direction Dr are separated from each other by a separator 14 defined by a portion of the core 12 located therebetween. Although the first and second portions 22 and 24 of each permanent magnet 20 forming the north pole come closer to each other as they extend away from the stator-facing surface OS in the axial direction Da, ends of the first and second portions 22 and 24 farthest away from the stator-facing surface OS are separated from each other by another separator 14 defined by a portion of the core 12 located therebetween. Thus, an entirety of the core 12 that is a component of the rotor 10 has a single-piece construction. Accordingly, a method for manufacturing the rotor 10 according to this embodiment may involve injection-molding a magnetic material using, for example, the core 12 as a metal mold, thus forming each permanent magnet 20 inside the core 12.

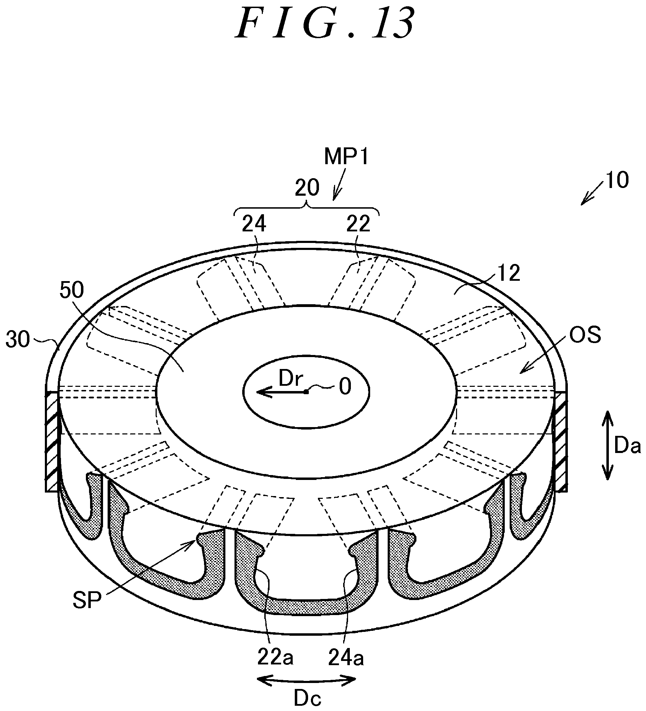

A seventh embodiment of the invention will be described below with reference to FIG. 13, with attention focused on differences between the first embodiment and the seventh embodiment.

FIG. 13 illustrates the structure of the rotor 10 according to the seventh embodiment. For convenience, components of the rotor 10 in FIG. 13 corresponding to those of the rotor 10 in FIG. 1 are identified by the same reference characters. As illustrated in FIG. 13, each permanent magnet 20 according to this embodiment differs from each permanent magnet 20 illustrated in FIG. 10 in that the portion of each permanent magnet 20 located inward in the radial direction Dr is removed. Thus, the first and second portions 22 and 24 come closer to each other as they extend inward in the radial direction Dr, but ends of the first and second portions 22 and 24 inward in the radial direction Dr are not connected to each other. In other words, the first and second portions 22 and 24 serve as independent magnets extending in the radial direction Dr. In this embodiment, the ends of the first and second portions 22 and 24 inward in the radial direction Dr are exposed through the core 12 and in contact with a low magnetic permeability portion 50 having a lower magnetic permeability than the core 12. The low magnetic permeability portion 50 is a cylindrical member fitted to the inner portion of the core 12.

Thus, the number of magnetic fluxes passing through paths connecting the inner peripheral surfaces 22a and 24a of the first and second portions 22 and 24 with the outer peripheral surfaces 22b and 24b of the first and second portions 22 and 24 through the member inward in the radial direction Dr is smaller than when the low magnetic permeability portion 50 is replaced by the core 12. The low magnetic permeability portion 50 has a lower magnetic permeability than the core 12. This increases magnetic resistance of the paths connecting the inner peripheral surfaces 22a and 24a of the first and second portions 22 and 24 with the outer peripheral surfaces 22b and 24b of the first and second portions 22 and 24 through the low magnetic permeability portion 50. Consequently, the number of magnetic fluxes passing through these paths decreases. In addition, the amount of magnets used in this arrangement is smaller than the amount of magnets used in the arrangement illustrated in FIG. 1.

At least one of the features of the foregoing embodiments may be modified as described below.

In the arrangements illustrated in FIGS. 10, 12 and 13, an entirety of each end face Tdo facing the stator in the axial direction Da is covered with the core 12. When the distance between the end face Tdo and the stator-facing surface OS increases as the end face Tdo extends toward the portion of the magnetic pole inward in the circumferential direction Dc, however, an entirety of each end face Tdo facing the stator in the axial direction Da does not necessarily have to be covered with the core 12. In one example, a portion of each end face Tdo outward of the magnetic pole in the circumferential direction Dc may be exposed through the core 12.

In the arrangements illustrated in FIGS. 10 and 13, the protrusions SP do not necessarily have to be provided in order to increase the length of each permanent magnet 20 in the orientation direction MD. In the arrangement illustrated in FIG. 5, ends of the first and second portions 22 and 24 adjacent to the stator-facing surface OS in the axial direction Da may be provided with the protrusions SP extending toward the inner portion of the magnetic pole. In the arrangement illustrated in FIG. 12, an end of each end face Tdo adjacent to the inner portion of the magnetic pole may be provided with the protrusion SP.

When the inner peripheral surfaces 22a and 24a of the first and second portions 22 and 24 come closer to each other as they extend away from the stator-facing surface OS in the axial direction Da as illustrated in FIG. 5, for example, the first and second portions 22 and 24 may be connected to a bottom of the permanent magnet 20 located farthest away from the stator-facing surface OS. In this case, the bottom may include a portion located inward of the magnetic pole, i.e., a portion located inward of the inner peripheral surfaces 22a and 24a of the first and second portions 22 and 24 in the circumferential direction Dc. The inner peripheral surface of the bottom that forms the magnetic pole may be parallel to the stator-facing surface OS.

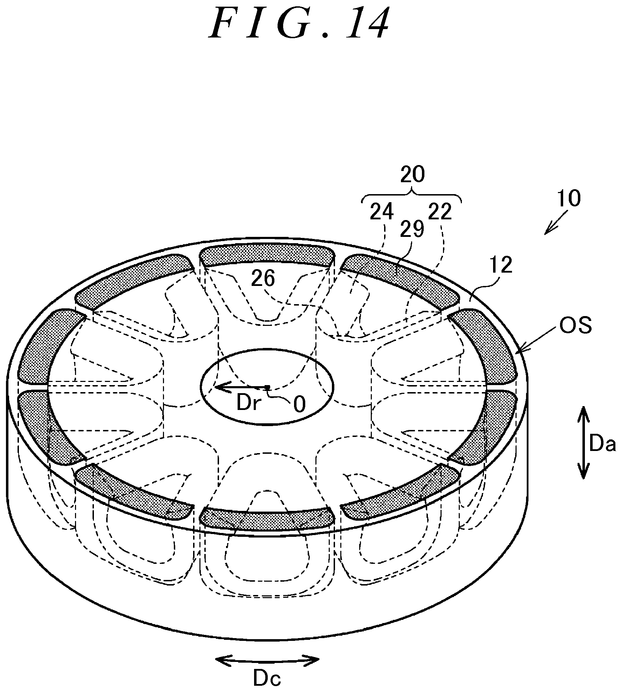

The permanent magnet 20 including the outer connection 29 is not limited to the permanent magnet 20 illustrated in FIG. 7, for example. In one example, each permanent magnet 20 may include the outer connection 29 illustrated in FIG. 14, with the first and second portions 22 and 24 having shapes similar to those illustrated in FIG. 10. The permanent magnet 20 including the outer connection 29 does not necessarily have to be provided with the bottom 28. As illustrated in FIG. 5 or FIG. 12, for example, each permanent magnet 20 may be configured so that the inner peripheral surfaces 22a and 24a of the first and second portions 22 and 24 come closer to each other in the circumferential direction Dc as they extend away from the stator-facing surface OS in the axial direction Da.

The inner peripheral surfaces 22a and 24a of the first and second portions 22 and 24 of each permanent magnet 20 having a skewed shape (see FIG. 9A) in a cross section perpendicular to the axial direction Da are not limited to those illustrated in FIG. 9A in which the inner peripheral surfaces 22a and 24a are inclined to one side relative to the radial direction Dr. In one example, each permanent magnet 20 having a skewed shape may include the outer connection 29 as illustrated in FIG. 7 or FIG. 14. In another example, the inner peripheral surfaces 22a and 24a of the first and second portions 22 and 24 of each permanent magnet 20 having a skewed shape may come closer to each other in the circumferential direction Dc as they extend away from the stator-facing surface OS in the axial direction Da as illustrated in FIG. 5 or FIG. 12, with no bottom 28 provided therebetween.

Although the length of the cylindrical member 30 in the axial direction Da is equal to the length of the core 12 in the axial direction Da in the above embodiments, the invention is not limited to these embodiments. In one example, the length of the cylindrical member 30 in the axial direction Da may be longer than the length of the core 12 in the axial direction Da, so that the cylindrical member 30 protrudes toward the stator relative to the stator-facing surface OS, with an entirety of the outer peripheral surface 12a of the core 12 covered with the cylindrical member 30.

Exposing each permanent magnet 20 at the outer peripheral surface 12a of the core 12 does not necessarily require the cylindrical member 30. No cylindrical member 30 may be required, for example, when the force connecting each permanent magnet 20 to the core 12 provides sufficient resistance to centrifugal force.

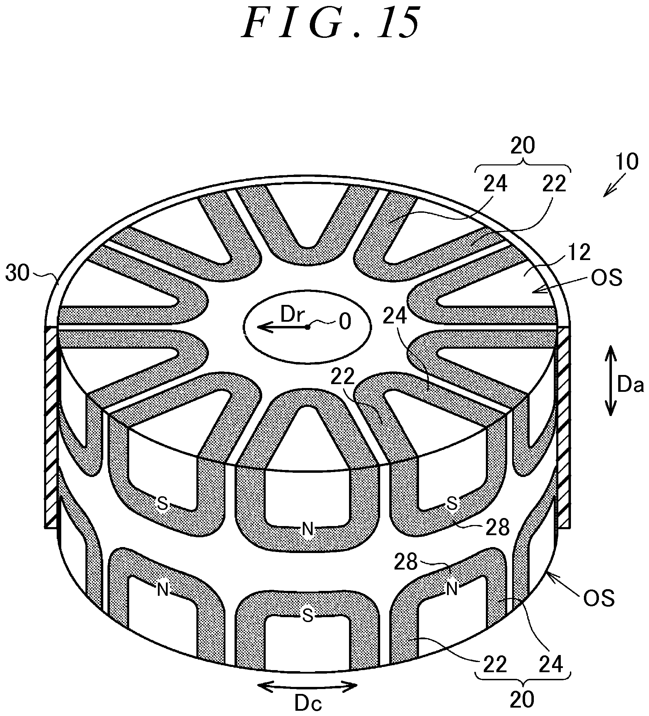

The number of stator-facing surfaces of the rotor 10 is not limited to one. FIG. 15 illustrates the rotor 10 configured so that end faces of the rotor 10 at the ends thereof in the axial direction Da serve as stator-facing surfaces. For convenience, components of the rotor 10 in FIG. 15 corresponding to those of the rotor 10 in FIG. 1, for example, are identified by the same reference characters. The rotor 10 illustrated in FIG. 15 includes two rotors 10 one of which is illustrated in FIG. 1, with the two rotors 10 connected to each other at end faces thereof that are not stator-facing surfaces. Note that each permanent magnet 20 adjoining the stator-facing surface OS facing a first stator is adjacent in the axial direction Da to an associated one of the permanent magnets 20 adjoining the stator-facing surface OS facing a second stator so that the permanent magnets 20 of the rotors 10 adjacent to each other in the axial direction Da form different magnetic poles. The arrangement illustrated in FIG. 15 may be such that the bottoms 28 of the permanent magnets 20 adjacent to each other in the axial direction Da are connected to each other.

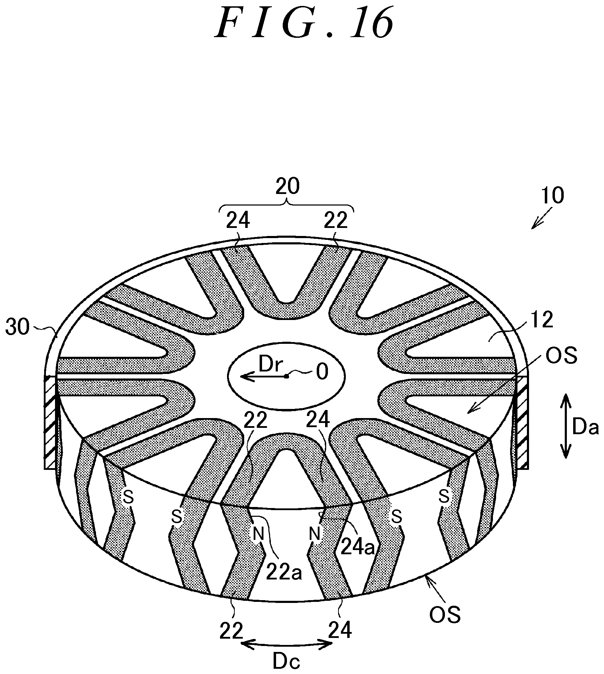

The shapes of the permanent magnets 20 of the rotors 10 having the stator-facing surfaces OS at the ends of the rotors 10 in the axial direction Da are not limited to those illustrated in FIG. 15, but may be those illustrated in FIG. 5, 6, 9, 10, 12, 13 or 14, for example. The shapes of the permanent magnets 20 are not limited to those illustrated in FIG. 5, 6, 9, 10, 12, 13 or 14, but may be those illustrated in FIG. 16, for example. For convenience, components of the rotor 10 in FIG. 16 corresponding to those of the rotor 10 in FIG. 1, for example, are identified by the same reference characters. In the arrangement illustrated in FIG. 16, the first portions 22 of the permanent magnets 20 extending from the ends of the rotor 10 in the axial direction Da are connected to each other, and the second portions 24 of the permanent magnets 20 extending from the ends of the rotor 10 in the axial direction Da are connected to each other. In the arrangement illustrated in FIG. 16, the distance between the inner peripheral surfaces 22a and 24a of the first and second portions 22 and 24 in the circumferential direction Dc decreases as they extend away from the corresponding stator in the axial direction Da, even though the distances of the inner peripheral surfaces 22a and 24a from the central axis O are the same. The inner peripheral surfaces 22a and 24a, however, are not connected to each other at a central position in the axial direction Da where the inner peripheral surfaces 22a and 24a are closest to each other in the circumferential direction Dc.

The arrangement including the separators 14 separating the first and second portions 22 and 24 from each other is not limited to that illustrated in FIG. 12 in which the distance between the inner peripheral surfaces 22a and 24a of the first and second portions 22 and 24 in the circumferential direction Dc decreases as the inner peripheral surfaces 22a and 24a extend away from the stator-facing surface OS in the axial direction Da. In one example, the arrangement illustrated in FIG. 1 in which each permanent magnet 20 includes the bottom 28 may be such that each bottom 28 is divided into two by the separator 14. In another example, the arrangement illustrated in FIG. 1 may be such that the inner connections 26 are replaced by the separators 14.

FIG. 13 illustrates the example where the first and second portions 22 and 24 of each permanent magnet 20 serve as independent magnets extending in the radial direction Dr, with regions of the first and second portions 22 and 24 adjacent to the stator-facing surface OS being embedded in the core 12. The first and second portions 22 and 24 serving as independent magnets extending in the radial direction Dr, however, are not limited to those illustrated in FIG. 13. Alternatively, the end faces of the first and second portions 22 and 24 adjacent to the stator-facing surface OS may be exposed at the stator-facing surface OS as illustrated in FIG. 1, for example.

Each permanent magnet 20 is not limited to the mixture of the magnetic particles and the resin but may be a sintered magnet, for example. The number of magnetic poles of the rotor 10 is not limited to the number illustrated in each of the foregoing embodiments. In the arrangement illustrated in FIG. 13, the low magnetic permeability portion 50 is optional.

The axial gap type dynamo-electric machine is not limited to one incorporated into an actuator to steer a vehicle. The axial gap type dynamo-electric machine may be an electric motor to be used as a driving force source or a power source for a wide variety of machines.

## Claims

1. A rotor for an axial gap type dynamo-electric machine, the rotor facing a stator in an axial direction of the rotor, the rotor comprising:
a core; and
a permanent magnet, wherein
the permanent magnet forms a particular magnetic pole of the rotor,
the permanent magnet includes a first portion and a second portion, the first and second portions extending through the core in a direction intersecting a plane perpendicular to the axial direction of the rotor, the first and second portions facing each other in a circumferential direction of the rotor, and
regions of the first and second portions facing each other in the circumferential direction of the rotor form the particular magnetic pole.

2. The rotor according to claim 1, wherein
the permanent magnet forming the particular magnetic pole includes a first region closest to the stator in the axial direction of the rotor, and a second region farther away from the stator than the first region in the axial direction of the rotor, the second region including a sub-region located inward of the particular magnetic pole in the circumferential direction of the rotor.

3. The rotor according to claim 1 or 2, wherein
the permanent magnet forming the particular magnetic pole has a first length and a second length in an orientation direction, the first length being a length of a region of the permanent magnet adjacent to the stator in the direction intersecting the plane perpendicular to the axial direction of the rotor, the second length being a length of a region of the permanent magnet away from the stator in the direction intersecting the plane perpendicular to the axial direction of the rotor, the first length being longer than the second length.

4. The rotor according to any one of claims 1 to 3, wherein
end faces of the first and second portions outward in a radial direction of the rotor are exposed through the core.

5. The rotor according to claim 4, wherein
a cylindrical member is fitted to an outer side the core in the radial direction, and
the cylindrical member has a lower magnetic permeability than the core.

6. The rotor according to any one of claims 1 to 5, wherein
the first and second portions are connected to each other at an inner connection located inward in the radial direction of the rotor.

7. The rotor according to any one of claims 1 to 6, wherein
the first and second portions are connected to each other at an outer connection located outward in the radial direction of the rotor, and
an outer peripheral surface of the outer connection faces the core, the outer peripheral surface being an end face of the outer connection located outward in the radial direction of the rotor.

8. The rotor according to any one of claims 1 to 5 or claim 7, wherein
radially inner ends of the first and second portions of the permanent magnet forming the particular magnetic pole are exposed through the core without being connected to each other.

9. The rotor according to any one of claims 1 to 8, wherein
a region of the first portion facing the second portion and a region of the second portion facing the first portion are inclined to one side relative to the radial direction of the rotor, the regions of the first and second portions being inclined at least at an end face of the rotor facing the stator.

10. The rotor according to any one of claims 1 to 9, wherein
the first portion and the second portion extending in the direction intersecting the plane perpendicular to the axial direction of the rotor respectively include a first stator-facing end face and a second stator-facing end face,
portions of the first and second stator-facing end faces located outward in a radial direction of the rotor are at least partially covered with the core in the axial direction of the rotor, and
a distance between a stator-facing surface of the rotor and the portions of the first and second stator-facing end faces at least partially covered with the core increases as the first and second stator-facing end faces extend toward an inner portion of the particular magnetic pole in the circumferential direction of the rotor.

11. The rotor according to any one of claims 1 to 10, wherein
a material for the permanent magnet is a mixture of magnetic particles and a resin.
